# EUROPÄISCHE PATENTSCHRIFT

(11) **EP 2 852 248 B1**
(45) Veröffentlichungstag und Bekanntmachung des Hinweises auf die Patenterteilung: **20.04.2016**
(21) Anmeldenummer: 14183163.6
(22) Anmeldetag: 02.09.2014
(51) Int. Cl.: H05B 3/74, F24C 15/10, H05B 6/06, H05B 6/12

(54) **VORRICHTUNG UND VERFAHREN ZUR TOPFERKENNUNG**
DEVICE AND METHOD FOR POT DETECTION
DISPOSITIF ET PROCÉDÉ DESTINÉS À LA DÉTECTION DE CASSEROLE

(30) Priorität: 20.09.2013 DE 102013218950
(43) Veröffentlichungstag der Anmeldung: 25.03.2015
(73) Patentinhaber: E.G.O. Elektro-Gerätebau GmbH, 75038 Oberderdingen (DE)
(72) Erfinder: Frank, Marcus, 75038 Oberderdingen (DE); Graff, Frank, 16818 Radensleben (DE); Kuehn, Henry, 16540 Hohen Neuendorf (DE); Waechter, Ulrich, 76646 Bruchsal (DE)
(74) Vertreter: Patentanwälte Ruff, Wilhelm, Beier, Dauster & Partner mbB

(56) Entgegenhaltungen:
- EP-A1- 0 831 675
- DE-A1- 10 242 099
- US-A1- 2002 070 211
- US-A1- 2013 175 254

## Beschreibung

Die Erfindung betrifft eine Vorrichtung und ein Verfahren zur Topferkennung an einem Kochfeld mit mehreren Kochstellen daran. Eine solche Topferkennung kann zur Erhöhung der Betriebssicherheit dienen, so dass beispielsweise eine Kochstelle abgeschaltet wird bei zu lange entferntem Topf, wobei unter dem Begriff Topf jedes aufgestellte Gargefäß oder auch eine Pfanne zu verstehen ist.

Aus der US 5658478 und der EP 1094688 B1 ist es bekannt, eine Topferkennung an einer Kochstelle quasi optisch durchzuführen mit einem Lichtsender und einem Lichtempfänger. Dies funktioniert nach dem Prinzip einer Reflex-Lichtschranke und es werden pro Kochstelle bzw. pro zu erkennendem Topf jeweils genau ein Lichtsender und ein Lichtempfänger verwendet, die dieser Kochstelle zugeordnet sind. Der Lichtempfänger dient dazu, das von dem Lichtsender ausgestrahlte und von einem aufgesetzten Topf zurückgesandte bzw. reflektierte Licht zu erkennen und dieses Erkennen als Erkennen eines aufgesetzten Topfes zu werten. Dies führt zu einer nicht unerheblichen Anzahl von Lichtsendern und Lichtempfängern, die nicht nur bauteilmäßig vorhanden sein und verbaut werden müssen, sondern die auch entsprechend angesteuert werden müssen.

EP0831675 offenbart eine Vorrichtung zur Topferrennung des Stands der Technik.

### Aufgabe und Lösung

Der Erfindung liegt die Aufgabe zugrunde, eine eingangs genannte Vorrichtung sowie ein eingangs genanntes Verfahren zu schaffen, mit denen Probleme des Stands der Technik vermieden werden können und es insbesondere möglich ist, eine optische Topferkennung durchzuführen mit möglichst geringem Bauteilaufwand bei hoher Ausfallsicherheit und Zuverlässigkeit der Topferkennung.

Gelöst wird diese Aufgabe durch eine Vorrichtung mit den Merkmalen des Anspruchs 1 sowie ein Verfahren mit den Merkmalen des Anspruchs 14. Vorteilhafte sowie bevorzugte Ausgestaltungen der Erfindung sind Gegenstand der weiteren Ansprüche und werden im Folgenden näher erläutert. Dabei werden manche der Merkmale nur für die Vorrichtung oder nur für das Verfahren genannt. Sie sollen jedoch unabhängig davon sowohl für die Vorrichtung als auch für das Verfahren selbstständig gelten können. Der Wortlaut der Ansprüche wird durch ausdrückliche Bezugnahme zum Inhalt der Beschreibung gemacht.

Es ist vorgesehen, dass die Vorrichtung mehrere Lichtsender und mindestens einen Lichtempfänger aufweist zur Topferkennung gemäß dem vorgenannten Prinzip einer Reflex-Lichtschranke. Das von einem Lichtsender an einen Topf ausgesandte und von diesem im Falle des Vorhandenseins reflektierte bzw. zurückgesandte Licht wird von einem Lichtempfänger empfangen bzw. registriert. Ist kein Topf aufgesetzt, wird auch kein Licht bzw. lediglich schwaches Licht durch Reflexion an der Glaskeramik und Teilen des Systems reflektiert bzw. zurückgesandt, was insgesamt eine gute und leichte Erkennung ermöglicht.

Erfindungsgemäß ist ein bzw. genau ein Lichtempfänger für mindestens zwei Kochstellen vorgesehen und dementsprechend ausgebildet sowie angesteuert. Dies bedeutet, wie nachfolgend noch näher erläutert wird, dass dieser oder ein solcher Lichtempfänger mehrfach angesteuert wird bzw. für eine Mehrfachauswertung von Kochstellen verwendet wird. Ebenso ist die Mehrfachverwendung eines Lichtsenders für eine Kochstelle oder mehr als eine Kochstellen möglich. So wird die Anzahl an notwendigen, zu verbauenden und anzusteuernden Lichtempfängern alleine oder Lichtempfängern und Lichtsendern reduziert. Es ist vorgesehen für das Verfahren sowie für die Vorrichtung, dass zur Auswertung ein Verfahren und eine Vorrichtung verwendet werden können, wie sie beispielsweise aus der deutschen Patentanmeldung DE 102013218951.6 mit Anmeldetag vom 20. September 2013 bekannt sind.

Vorteilhaft sind Lichtleitmittel vorgesehen, insbesondere im Wesentlichen bestehend aus Lichtleitern sowie Ein- und Auskoppelmitteln, um Licht von den mindestens zwei überwachten bzw. Lichtempfänger und Lichtsender zugeordneten Kochstellen an den Lichtempfänger und/oder Lichtsender zu leiten. Dies ermöglicht es unter anderem, dass die Lichtsender und Lichtempfänger nicht nahe an der Kochstelle angeordnet sein müssen, was teilweise aus baulichen bzw. Platzgründen schwierig ist und teilweise aus Betriebsgründen, beispielsweise bei Strahlungsheizeinrichtungen oder Gasbrennern, die hohe Umgebungstemperaturen bewirken. Lichtleiter der Lichtleitmittel sind vorteilhaft auf übliche Art und Weise ausgebildet aus Glasdrahtbündeln in Form von dünnen, länglichen und flexiblen Lichtleitern. Auch die Ein- und Auskoppelmittel sind vorteilhaft auf übliche Art und Weise ausgebildet. Vorteilhaft weisen die Lichtleitmittel an der Kochstelle im Wesentlichen senkrecht nach oben und können dabei entweder eine Kochfeldplatte des Kochfelds durchbrechen, insbesondere wenn diese lichtundurchlässig ist. Ein entsprechender Durchbruch ist dann entweder mit den Lichtleitmitteln zu verschließen oder mit separaten Fenstern odgl.. Dies gilt beispielsweise für Kochfeldplatten aus Metall bzw. Edelstahl, wie sie für Gaskochfelder verwendet werden, so dass auch hier eine Topferkennung möglich ist. Nach Erkennen des Entfernens eines Topfes oder wenn keiner aufgestellt ist kann beispielsweise die Leistung an der Kochstelle bzw. an einem entsprechenden Gasbrenner reduziert werden, alternativ nach einiger Zeit die Kochstelle bzw. der Gasbrenner abgeschaltet werden.

Bevorzugt sind allgemein Lichtsender und/oder Lichtempfänger unterhalb der Kochstelle oder einer Kochfeldplatte des Kochfeldes angeordnet. So können sie geschützt verbaut sein. Dies gilt dann vorteilhaft auch für die Lichtleitmittel, die auch unterhalb des Topfes bzw. Kochstelle oder Kochfeldplatte angeordnet sein können. Besonders bevorzugt sind die Lichtleitmittel nahe einer Heizeinrichtung bzw. sogar darunter und/oder durch diese hindurch vorgesehen.

Bei einer Kochfeldplatte aus lichtdurchlässigem Material, insbesondere Glaskeramik, wie sie für Induktionsheizeinrichtungen und Strahlungsheizeinrichtungen verwendet werden, können die Lichtleitmittel unterhalb davon enden und die lichtdurchlässige Kochfeldplatte nach oben durchstrahlen, und zwar sowohl bezüglich des ausgesandten als auch des reflektierten Lichts. Die Wellenlänge der Lichtsender kann an die Transmission der Kochfeldplatte angepasst sein.

Allgemein kann auch vorgesehen sein, dass das Vorhandensein eines Topfes auf einer Kochstelle an einer Anzeige des Kochfelds angezeigt wird, vorteilhaft auch das Entfernen bzw. Nichtvorhandensein, zumindest für einige Sekunden.

In einer ersten grundsätzlichen Ausgestaltung der Erfindung ist es möglich, dass jeweils für genau zwei oder eventuell auch drei oder bis zu sechs Kochstellen ein- und derselbe Lichtempfänger vorgesehen ist. Er wird also mehrfach verwendet, wobei sich eben eine Zweifach- oder Dreifachverwendung bis zu einer Sechsfachverwendung als vorteilhaft herausgestellt hat. Für diesen bzw. diesen genau einen Lichtempfänger sind Lichtleitmittel vorgesehen, die zu den zwei oder drei oder bis zu sechs von ihm überwachten Kochstellen führen. Dabei kann vorteilhaft für jeweils zwei oder eventuell auch drei oder bis zu sechs Kochstellen genau ein Lichtsender vorgesehen sein auf entsprechende Art und Weise. Für den Lichtsender sind wiederum Lichtleitmittel vorgesehen, die das von dem Lichtsender ausgesandte Licht zu den zugeordneten Kochstellen leiten bzw. senden. Dabei sollte für eine genaue Unterscheidung vorgesehen sein, dass die zwei oder drei Kochstellen, die auf vorgenannte Art und Weise genau einem Lichtempfänger zugeordnet sind, jeweils mit unterschiedlichen Lichtsendern verbunden sind bzw. jeweils unterschiedlichen Lichtsendern zugeordnet sind. Damit kann eine Steuerung der Topferkennung bzw. des gesamten Kochfelds genau erkennen, da sie den Betriebszustand der Lichtsender und der Lichtempfänger kennt, zu welchem Zeitpunkt welcher Lichtsender Licht aussendet und welcher Lichtempfänger Licht empfängt bzw. erhält. Grundsätzlich können Lichtsender entweder zeitversetzt arbeiten bzw. zeitversetzt Licht aussenden oder aber jeweils mit einer individuellen Codierung versehenes Licht, so dass der mindestens eine Lichtempfänger leicht erkennen kann, von welchem Lichtsender er Licht empfängt. In weiterer allgemeiner Ausgestaltung der Erfindung kann hier vorgesehen sein, dass die Lichtsender mit mindestens zwei oder drei, vorteilhaft fünf, Frequenzen Lichtsignale bzw. Licht aussenden. So können von außen bei nicht-aufgesetztem Topf einstrahlende Störquellen in der Umgebung des Kochfelds ausgeschlossen werden. Wenn der Lichtempfänger bei einer von drei verwendeten Frequenzen Licht erkennt, bei den anderen beiden aber nicht, liegt eine Störung vor und es ist kein Topf vorhanden. Dazu muss eigentlich bei allen verwendeten Frequenzen entsprechendes Licht vom Lichtempfänger registriert werden können.

Bei dieser ersten grundsätzlichen Ausgestaltung der Erfindung sind also bei einem Kochfeld mit beispielsweise vier Kochstellen zwei Lichtempfänger und zwei Lichtsender vorgesehen, insgesamt also vier Bauteile. Bei einem Kochfeld mit sechs Kochstellen wären es drei Lichtempfänger und drei Lichtsender, insgesamt also sechs Bauteile.

In einer zweiten grundsätzlichen Ausgestaltung der Erfindung ist vorgesehen, dass für mehr als zwei bzw. drei Kochstellen des Kochfelds, insbesondere für alle, genau ein Lichtempfänger vorgesehen ist. Hier sind wiederum Lichtleitmittel vorgesehen, mit denen dieser Lichtempfänger mit den zugeordneten Kochstellen verbunden ist. Für jede Kochstelle dieses Lichtempfängers, vorteilhaft für alle Kochstellen des Kochfelds, ist jeweils genau ein eigener Lichtsender vorgesehen, wobei auch hier wiederum entsprechende Lichtleitmittel vorgesehen sein können. So kann in einer Steuerung sehr einfach erkannt werden, von welchem Lichtsender der einzige Lichtempfänger gerade reflektiertes bzw. zurückgesandtes Licht empfängt, so dass daraus geschlussfolgert werden kann, dass auf der entsprechenden Kochstelle ein Topf aufgestellt ist. Auch hier kann wiederum, wie vorbeschrieben, vorgesehen sein, dass neben der individuellen Codierung der Lichtsender diese mit mehreren, vorzugsweise zwei oder drei, Frequenzen arbeiten, um Störquellen wie vorgenannt auszuschließen.

Bei dieser zweiten grundsätzlichen Ausgestaltung der Erfindung wird vorteilhaft nur ein einziger Lichtempfänger benötigt. Bei einem Kochfeld mit vier Kochstellen werden aber insgesamt fünf Bauteile, nämlich vier Lichtsender und ein Lichtempfänger, benötigt. Bei einem Kochfeld mit sechs Kochstellen sind es sieben Bauteile.

Der Bauteilaufwand für die Lichtleitmittel bzw. Lichtleiter selbst lässt sich nur schwer oder nicht reduzieren. Vorteilhaft werden die Lichtsender und Lichtempfänger nämlich nicht nahe an den Kochstellen platziert, sondern entfernt davon in einem Bereich, der temperaturmäßig unkritisch ist und vorteilhaft nahe an einer Steuerung des Kochfelds liegt. In diesem Bereich sind ohnehin aus Praktikabilitätsgründen pro Kochstelle zwei Lichtleiter zu verlegen, nämlich eben einmal für das von einem Lichtsender ausgesandte Licht und einmal für das von dem Topf eventuell reflektierte bzw. zurückgesandte Licht.

In Ausgestaltung der Erfindung kann einerseits vorgesehen sein, dass zwei Lichtleiter der Lichtleitmittel in einem spitzen Winkel zueinander enden. Dies kann auch für mehr als zwei Lichtleiter gelten. Vorteilhaft weisen ihre Enden auf einen Lichtsender bzw. einen Lichtempfänger, so dass das Einkoppeln oder Auskoppeln von Licht möglichst gut, effizient und ohne Verluste erfolgt. Dies gilt insbesondere bei zwei Lichtleitern für die vorgenannte erste grundsätzliche Ausgestaltung der Erfindung, bei der pro Lichtsender bzw. Lichtempfänger zwei Lichtleiter vorgesehen sind.

Andererseits ist es möglich, dass zwei Lichtleiter der Lichtleitmittel im Wesentlichen parallel zueinander verlaufen in ihrem Endbereich bzw. parallel zueinander enden. Dabei weisen sie in Richtung eines Lichtsenders und/oder Lichtempfängers, aber naturgemäß nicht beide direkt darauf. Nahe an dem Lichtsender bzw. Lichtempfänger können verspiegelte Flächen bzw. reflektierende Flächen vorgesehen sein, um das von den Lichtleitern ausgesandte Licht auf den Lichtempfänger zu lenken bzw. das von dem Lichtsender ausgesandte Licht auf die Lichtleiter.

Da üblicherweise Kochfelder vier bis sechs Kochstellen aufweisen, lässt sich die Anzahl der Lichtleitmittel bzw. Lichtleiter einerseits und Lichtsender und Lichtempfänger andererseits insgesamt begrenzen.

In weiterer Ausgestaltung der Erfindung weist die Vorrichtung vorteilhaft eine Halteeinrichtung für die Lichtleitmittel, Lichtsender und/Lichtempfänger auf, so dass diese eben nicht nahe an den Kochstellen angeordnet sind, sondern vorteilhaft zentral bzw. zusammengefasst und an einem für sie günstigen Ort. Die Halteeinrichtung kann vorteilhaft im Wesentlichen flach bzw. plattenartig ausgebildet sein. Die Lichtleiter der Lichtleitmittel sind bevorzugt mit gleicher Ausrichtung daran angeordnet, so dass eine Anschlussrichtung stets dieselbe ist. So können beispielsweise von der einen Richtung alle Lichtleiter an die Halteeinrichtung geführt sein und von der anderen Richtung die Lichtsender und Lichtempfänger herangeführt bzw. befestigt werden. An der Halteeinrichtung können Haltemittel für mindestens einen Lichtleiter bzw. die Lichtleitmittel vorgesehen sein, alternativ für ein Verbindungsstück für mehrere Lichtleiter. In bevorzugter Ausgestaltung der Erfindung sind dies Vorsprünge, Vertiefungen oder Kombinationen davon, insbesondere als Rast- oder Steckverbindungen, an denen die Lichtleitmittel, insbesondere mit an den Enden von Lichtleitern vorgesehenen Verbindungsstücken, einfach und vorteilhaft werkzeuglos befestigt werden können. Ähnliches kann auch für die Lichtsender und Lichtempfänger gelten. Alternativ kann hier die Halteeinrichtung zur Aufnahme einer Leiterplatte ausgebildet sein, auf welcher vorzugsweise alle Lichtsender bzw. Lichtempfänger angeordnet und elektrisch angeschlossen sind sowie auch elektrisch kontaktiert werden können, beispielsweise über eine Steckverbindung. So kann mit einem einzigen Montagevorgang die Anordnung sämtlicher Lichtsender und Lichtempfänger an der Halteeinrichtung erfolgen, wobei dabei gleichzeitig deren Ausrichtung definiert werden kann.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in Zwischenüberschriften und einzelne Abschnitte beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine schematische Schnittdarstellung eines Kochfelds aus dem Stand der Technik mit Reflex-Lichtschranken zur Topferkennung,
- Fig. 2 bis 4: erfindungsgemäße Anordnungen von Reflex-Lichtschranken zur Topferkennung an einem Kochfeld in unterschiedlicher Ausgestaltung,
- Fig. 5 und 6: zwei verschiedene Arten von Verbindungsbereichen zwischen Lichtsendern bzw. Lichtempfängern und Lichtleitern,
- Fig. 7: eine Steuerbaugruppe für ein Kochfeld mit einer Halteeinrichtung für Lichtleitmittel zur Ankopplung an Lichtsender und Lichtempfänger,
- Fig. 8: eine Vergrößerung der Halteeinrichtung aus Fig. 7,
- Fig. 9: einen Ausschnitt der Halteeinrichtung aus Fig. 8 in geänderter Perspektive,
- Fig. 10: einen in ein Gaskochfeld integrierten Gasbrenner mit Topfträger mit durch eine Kochfeldplatte durchgehenden Lichtleitern und
- Fig. 11: einen in ein Gaskochfeld integrierten Gasbrenner mit Topfträger und Topf mit unter einer Kochfeldplatte endenden Lichtleitern.

### Detaillierte Beschreibung der Ausführungsbeispiele

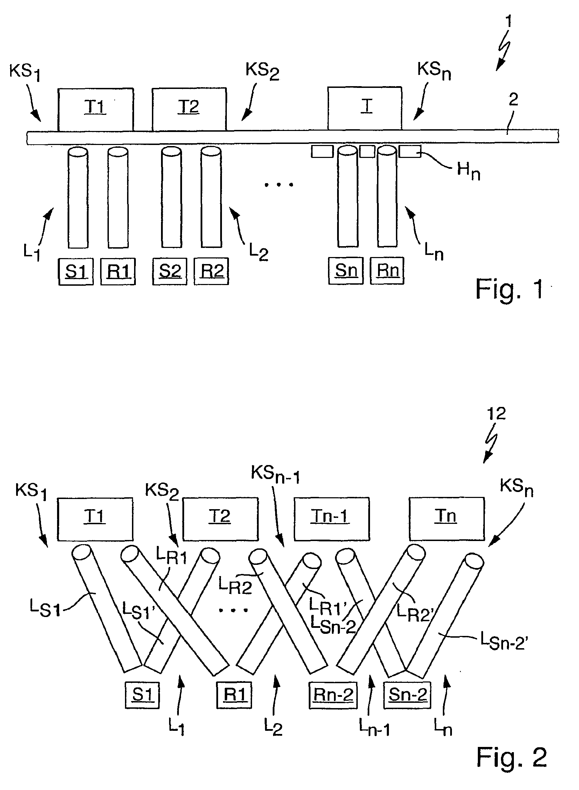

In Fig. 1 ist eine Vorrichtung entsprechend der eingangs genannten Art aus dem Stand der Technik schematisch dargestellt an einem Kochfeld 1 mit Kochfeldplatte 2, hier aus lichtdurchlässiger Glaskeramik. An dem Kochfeld 1 sind Kochstellen KS₁ bis KSₙ vorgesehen, auf denen beispielhaft jeweils ein Topf Tᵢ bis Tₙ aufgestellt ist. Unter der Kochstelle KSₙ ist schematisch eine Heizeinrichtung Hₙ dargestellt, beispielsweise als Strahlungsheizeinrichtung. Es sind auch n Lichtsender S₁ bis Sₙ und n Lichtempfänger R₁ bis Rₙ vorgesehen. Pro Kochstelle KS ist ein Lichtleitmittel L₁ bis Lₙ vorgesehen, jeweils bestehend aus zwei Lichtleitern, von denen jeweils einer zu einem Lichtsender S und einer zu einem Lichtempfänger R führt. Die Topferkennung der Töpfe T erfolgt nach dem vorbeschriebenen und bekannten Prinzip einer Reflex-Lichtschranke.

Es ist also zu erkennen, dass bei dem aus Fig. 1 ersichtlichen Prinzip für n Kochstellen KS n Lichtleitmittel L, n Lichtsender S und n Lichtempfänger R vorgesehen werden müssen. Die hauptsächlich teuren und komplizierten Bauteile sind die Lichtsender S und die Lichtempfänger R.

In Fig. 2 ist eine erfindungsgemäße Vorrichtung 12 dargestellt. Auch hier sind n Kochstellen KS₁ bis KSₙ vorgesehen für n Töpfe T₁ bis Tₙ. Auch hier arbeitet die Topferkennung nach dem Prinzip einer Reflex-Lichtschranke und es sind n Lichtleitmittel L vorgesehen, jeweils bestehend aus zwei Lichtleitern. Beim ersten Lichtleitmittel L₁ geht ein erster Lichtleiter L_{S1} von der Kochstelle KS₁ zum Lichtsender S₁. Ein zweiter Lichtleiter L_{S1} geht von der Kochstelle KS₂ ebenfalls zu dem Lichtsender S₁. Von der Kochstelle KSₙ₋₁ geht ein Lichtleiter L_{Sn-2} zu einem Lichtsender Sₙ₋₂, und von der Kochstelle KSₙ geht ein Lichtleiter L_{Sn-2'} ebenfalls zu dem Lichtsender Sₙ₋₂. Von der Kochstelle KS₁ geht ein Lichtleiter L_{R1} zu einem Lichtempfänger R₁, und von der Kochstelle KSₙ₋₁ ein Lichtleiter L_{R1'}. Ebenso geht von der Kochstelle KS₂ ein Lichtleiter L_{R2} zu dem Lichtempfänger Rₙ₋₂. Auch von der Kochstelle KSₙ geht ein Lichtleiter L_{R2'} zu dem Lichtempfänger Rₙ₋₂. Somit liegt hier die eingangs genannte Doppelbelegung vor, so dass jeweils für genau zwei Kochstellen KS genau ein Lichtsender S vorgesehen ist, und für genau zwei Kochstellen KS genau ein Lichtempfänger R vorgesehen ist. Allerdings sind dies jeweils unterschiedliche Kochstelle KS bzw. nur eine Kochstelle KS ist gemeinsam und die anderen sind unterschiedliche. Zumindest für geradzahlige Mengen von Kochstellen KS funktioniert dies gut erkennbar.

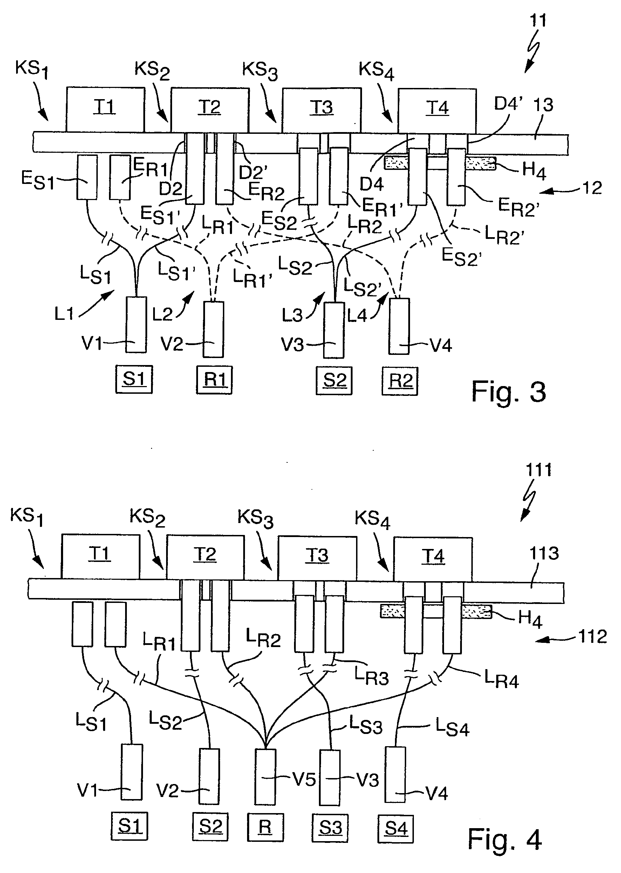

In der Fig. 3 ist etwas konkreter ein Kochfeld 11 mit Kochfeldplatte 13 dargestellt, an dem eine erfindungsgemäße Vorrichtung 12 zur Topferkennung vorgesehen ist. Hier sind vier Kochstellen KS₁ bis KS₄ vorgesehen mit jeweils möglicherweise vier Töpfen T₁ bis T₄ darauf. Die Vorrichtung 12 weist vier Lichtleitmittel L₁ bis L₄ auf. Jedes Lichtleitmittel L weist zwei Lichtleiter auf, die jeweils zu einem der Lichtsender S₁ oder S₂ bzw. Lichtempfänger R₁ oder R₂ gehen. Die Lichtleiter sind zur Kochstelle KS hin mit Endstücken E versehen und zu Lichtsendern S bzw. Lichtempfängern R hin mit Verbindern V. Die Endstücke E weisen jeweils nur einen einzigen Lichtleiter auf, während zwei Lichtleiter in einen Verbinder V hineingeführt sind.

Konkret ist die Kochstelle KS₁ ebenso wie die Kochstelle KS₂ über einen Lichtleiter L_{S1} bzw. L_{S1} mit einem Lichtsender S₁ verbunden bzw. diesem zugeordnet. Entsprechend ist die Kochstelle KS₃ mit einem Lichtleiter L_{S2} und die Kochstelle KS₄ mit einem Lichtleiter L_{S2} dem Lichtsender S₂ zugeordnet. Hier sind jeweils noch die Verbinder V₁ und V₃ sowie die Endstücke E_{S1}, E_{S1} und E_{S2}, E_{S2'} vorgesehen.

Die Kochstelle KS₁ ist über einen Lichtleiter L_{R1} und einen Verbinder V₂ dem Lichtempfänger R₁ zugeordnet, ebenso die Kochstelle KS₃ über einen Lichtleiter L_{R1}. Die Kochstelle KS₂ ist über einen Lichtleiter L_{R2} und einen Verbinder V₄ einem Lichtempfänger R₂ zugeordnet, ebenso die Kochstelle KS₄ über einen Lichtleiter L_{R2'}. Für vier Kochstellen KS werden also vier Lichtleitmittel bzw. acht Lichtleiter und vier elektrische Bauteile, nämlich zwei Lichtsender S und zwei Lichtempfänger R, benötigt.

Des Weiteren ist in der Fig. 3 schematisch zu erkennen, dass beispielsweise die Endstücke E_{S1} und E_{R1} von unten an eine Unterseite der Kochfeldplatte 13 reichen zu deren Durchstrahlung. Bei der Kochstelle KS₂ sind zwei Durchbrüche D₂ und D_{2'} in der Kochfeldplatte 13 vorgesehen, in welche die Endstücke E_{S1'} und E_{R2} hineinragen bzw. eingesteckt sind. Diese Durchbrüche D sollten dicht verschlossen sein, entweder durch die Endstücke E oder durch Fenster, Dichtmittel odgl.

Bei den Kochstellen KS₃ und KS₄ sind ebenfalls Durchbrüche D vorgesehen, hier ragen die Endstücke E aber nicht bis an eine Oberseite der Kochfeldplatte 13, sondern nur ein Stück in die Durchbrüche hinein. Der Bereich oberhalb davon kann mit vorgenannten Fenstern, lichtdurchlässigem Dichtmaterial odgl. verschlossen und eingeebnet werden.

Auch in der Fig. 3 ist als schematisch dargestellte Heizeinrichtung H₄ eine Induktionsheizeinrichtung dargestellt, die aber auch eine Strahlungsheizeinrichtung sein könnte. Da die Endstücke E_{S2'} und E_{R2'} vorteilhaft durch den Bereich der Induktionsheizeinrichtung durchgehen, kann dies entweder durch einen zentralen Bereich erfolgen, in dem üblicherweise auch keine Windungen vorliegen bei einer Induktionsheizeinrichtung. Alternativ sind die Endstücke E_{S2'} und E_{R2'} relativ dünn bzw. schmal und können auch mitten durch ein Windungsfeld eines Leiters der Induktionsheizeinrichtung verlaufen.

Im Vergleich zu der Anordnung aus dem Stand der Technik gemäß Fig. 1, wo bei vier Kochstellen KS zwar auch vier Lichtleitmittel bzw. acht Lichtleiter benötigt werden, aber eben auch vier Lichtsender S und vier Lichtempfänger R, können bei der erfindungsgemäßen Vorrichtung gemäß Fig. 3 zwei Lichtsender und zwei Lichtempfänger eingespart werden.

Eine alternative Ausgestaltung einer erfindungsgemäßen Vorrichtung 112 an einem Kochfeld 111 ist in Fig. 4 dargestellt. Auch hier sind, in verkürzter Form dargestellt, vier Kochstellen KS₁ bis KS₄ mit Töpfen T₁ bis T₄ vorgesehen. An einer Kochfeldplatte 113 sind die Endstücke E entsprechend der Fig. 3 vorgesehen, ebenso bei der Kochstelle KS₄ eine schematisch dargestellte Heizeinrichtung H₄. Von der Kochstelle KS₁ verläuft ein Lichtleiter L_{S1} über einen Verbinder V₁ zu einem Lichtsender S₁. In ähnlicher Form verlaufen Lichtleiter L_{S2}, L_{S3} und L_{S4} von den Kochstellen KS₂, KS₃ und KS₄ über Verbinder V₂, V₃ und V₄ zu den Lichtsendern S₂, S₃ und S₄. Von allen Kochstellen KS₁ bis KS₄ verlaufen Lichtleiter L_{R1} bis L_{R4} zu einem Verbinder V₅ und über diesen an einen Lichtempfänger R, also einen einzigen Lichtempfänger für das gesamte Kochfeld 111. Im direkten Vergleich zur Fig. 3 wird also bei dieser Vorrichtung 112 dieselbe Anzahl von Lichtleitmitteln bzw. Lichtleitern benötigt, aber ein Bauteil mehr, weil vier Lichtsender S₁ bis S₄ und ein Lichtempfänger R benötigt werden. Vorteilhaft ist dieses Prinzip der Ausgestaltung der Vorrichtung, wenn die Einsparung von Lichtempfängern den Kostenaufwand von gegenüber Konzept der Fig. 2 und 3 zusätzlichen Lichtsendern lohnt, weil sie beispielsweise preiswerter sind aufgrund der geringeren Sendeleistung da sie nur eine KS anstrahlen anstelle von zwei wie im Konzept der Fig. 2 und 3, oder aber sich sonstige Aspekte aus einer vereinfachten Ansteuerung ergeben können.

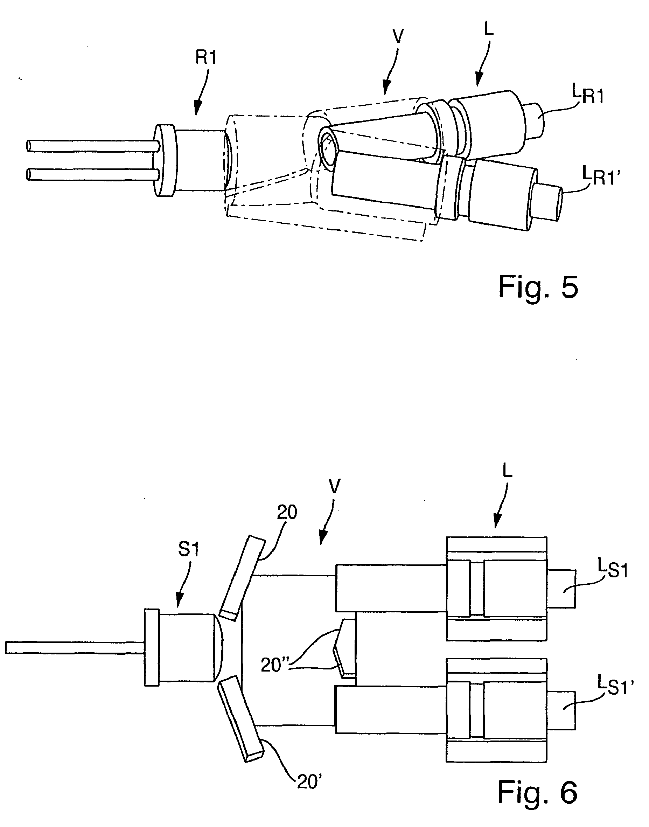

In Fig. 5 ist schematisch dargestellt, wie zwei Lichtleiter L_{R1} und L_{R1'} von Lichtleitmitteln L über einen Verbinder V an einen Lichtempfänger R₁ angekoppelt werden können. Dies erfolgt, indem die Enden der Lichtleiter L_{R1} und L_{R1'} in einem spitzen Winkel zueinander stehen bzw. in den Verbinder V hineinlaufen. Sie können dabei so ausgerichtet sein, dass sie genau auf den Lichtempfänger R₁ weisen und dieser somit maximal mit dem von den Lichtleitern ausgesandten Licht beaufschlagt wird. Ein derartiger Verbinder V könnte auch noch für mehr als zwei Lichtleiter ausgelegt sein, beispielsweise noch für jeweils einen Lichtleiter oberhalb und einen Lichtleiter unterhalb der von den beiden hier dargestellten Lichtleitern gebildeten Ebene.

In Fig. 6 ist eine alternative Ausgestaltung eines Verbinders V dargestellt, mit dem beispielsweise zwei Lichtleiter L_{S1} und L_{S1'}, die parallel verlaufen und mit paralleler Ausrichtung enden, mit einem Lichtsender S₁ verbunden sind bzw. diesem zugeordnet sind. Der Verbinder V weist drei Spiegelflächen 20, 20' und 20" auf, welche von dem Lichtsender S₁ ausgesandtes Licht, welches noch nicht in die Lichtleiter L_{S1} und L_{S1}' eingekoppelt wird, nach Reflexion doch noch einkoppeln. Dazu kann ein Teil des vom Lichtsender S₁ ausgesandten Lichts von der winkligen und mittig angeordneten Spiegelfläche 20" zu den Spiegelflächen 20 und 20' zurückgeworfen werden und dann von diesen in die Lichtleiter L_{S1} und L_{S1'} hinein. Dieselbe Anordnung eignet sich auch für einen Empfänger E1 anstelle von S1.

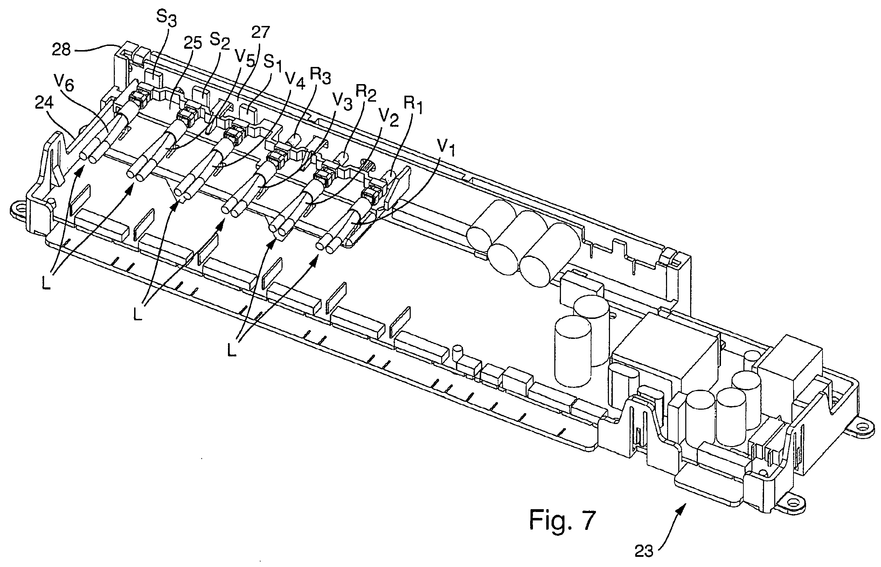

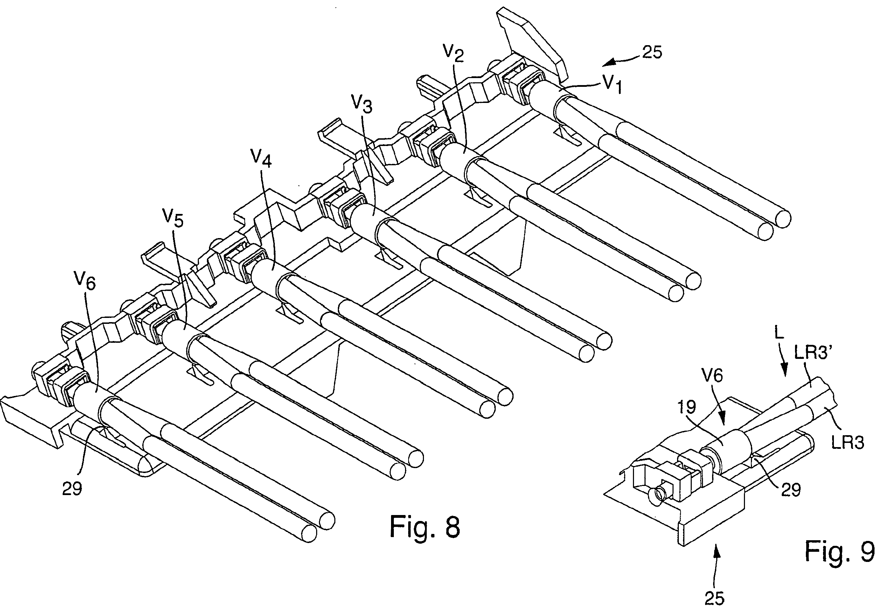

In Fig. 7 ist eine Steuerbaugruppe 23 dargestellt, wie sie in ein Kochfeld 11 eingebaut werden kann und möglicherweise neben der Funktion der Topferkennung noch weitere Funktionen aufweisen kann, insbesondere die gesamte Steuerungselektronik für das Kochfeld 11 aufweisen kann. An der Steuerbaugruppe 23 mit einem eigenen Gehäuse 24ist eine Halteeinrichtung 25 vorgesehen, die in den Fig. 8 und 9 vergrößert dargestellt ist. An der Halteeinrichtung 25 kommen die Lichtleitmittel L mit den einzelnen Lichtleitern samt Verbindern V₁ bis V₆ an und werden über Rasthaken 29 befestigt, insbesondere an den Verbindern V. Hinter der Halteeinrichtung 25 und im Wesentlichen in einem rechten Winkel zu ihrer Fläche ist eine Leiterplatte 27 mit einem eigenen Gehäuse 28 als Topferkennungsmodul angeordnet, welche für insgesamt sechs Kochstellen links drei Lichtsender S₁, S₂ und S₃ sowie rechts drei Lichtempfänger R₁, R₂ und R₃ aufweist. Die Lichtleitmittel L mit den einzelnen Lichtleitern sind vorteilhaft als vorkonfektionierte Lichtleiterstränge ausgebildet, die bei Montage des Kochfelds mit Endstücken E entsprechend der Fig. 3 und 4 an einer Kochfeldplatte oder den Heizeinrichtungen befestigt werden. Ihre Verbinder V können eben direkt mittels der Rasthaken 29 an der Halteeinrichtung 25 befestigt werden, wobei dabei eben auch, wie vor allem die Fig. 9 zeigt, eine genaue Ausrichtung zum exakten Einkoppeln und Auskoppeln von Licht möglich ist. Die Halteplatte kann allgemein dazu dienen, das Einkoppeln von Licht aus der Umgebung der Empfänger R und Abstrahlen der Sender S in die Umgebung durch Umschließen als optische Abdichtung des Gehäuses von Sender/Empfänger zu verhindern.

Eine vorgenannte Codierung der Lichtsignale der Lichtsender S derart, dass sie zum einen voneinander unterscheidbar sind und zum anderen gegen Störeinflüsse bzw. Störlichtquellen unempfindlich sind, kann über unterschiedliche Signalfolgen, Lichtcodes oder Frequenzen erfolgen.

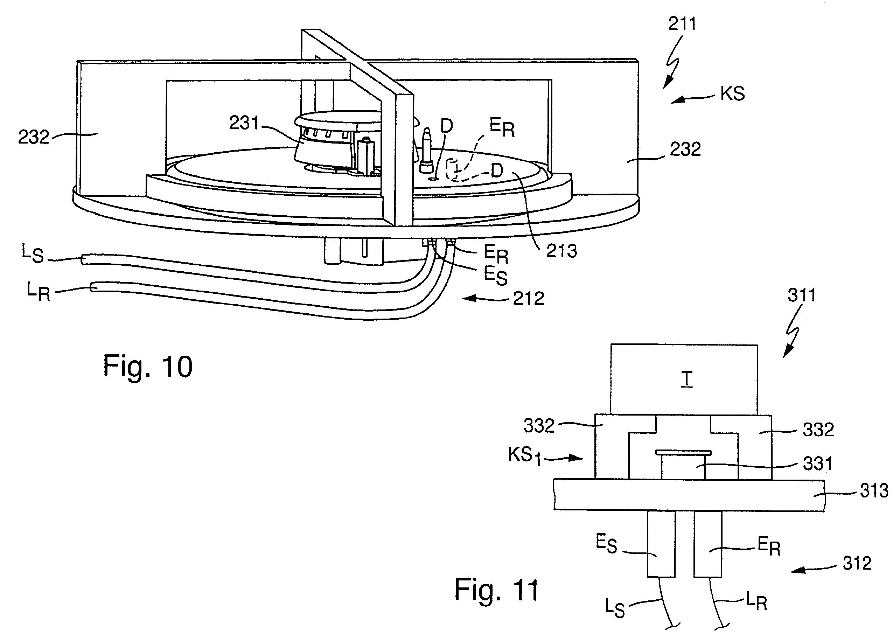

Die Fig. 10 zeigt einen in ein Gaskochfeld 211 integrierten Gasbrenner 231 mit einem Topfträger 232, auf den ein hier nicht vorhandener Topf aufgestellt werden kann zur Beheizung durch den Gasbrenner 231. Der Gasbrenner, der zum Einbau in dünnwandige Kochfeldplatten aus Edelstahl konstruiert ist, ruht auf einer Teil-Kochfeldplatte 213 zur Integration bzw. Adaption in ein Kochfeld mit einer Glaskeramikoberfläche mit größerer Kochfeldplattendicke. Da die TeilKochfeldplatte 213 aus Edelstahl oder emailliertem Stahl nicht lichtdurchlässig ist, müssen Lichtleiter der Vorrichtung 212 durch die Teil-Kochfeldplatte 213 hindurchgehend bzw. es müssen zumindest Durchbrüche D vorhanden sein ähnlich Fig. 3 bei den Kochstellen KS₂ bis KS₄. Diese Technik der Durchbrüche D findet ebenso bei Kochfeldplatten aus Edelstahl Anwendung, wobei der Brenner keine Teil-Kochfeldplatte aufweist. Der Durchbruch für die Endstücke ist dann in der Edelstahl-Kochfeldplatte vorgesehen. Darin ist links ein Endstück E_{S} eingesteckt, das aber nicht über die Oberfläche der Teil-Kochfeldplatte 213 hoch ragt. Rechts ist ein Endstück ER eingesteckt, das gestrichelt dargestellt ist und hoch ragt. Die Endstücke sind mit Lichtleitern L_{S} und L_{R} verbunden. Das Licht muss also eine Distanz zwischen einem Endstück E und der Unterseite eines aufgestellten Topfes überbrücken. Das ist an sich kein Problem, spielt aber eine Rolle bei der Signalauswertung in der Steuerbaugruppe bzgl. Störeinflüssen bzw. Störfrequenzen und trägt erheblich zur Dämpfung des Lichtsignals bei. Das Lichtsignal überbrückt die Distanz doppelt, nämlich vom Lichtsender-Endstück E_{S} zur Topfunterseite und zurück von der Topfunterseite zum Lichtempfänger-Endstück E_{R}.

Die Fig. 11 zeigt einen in ein Gaskochfeld 311 integrierten Gasbrenner 331 mit einem Topfträger 332, auf den ein Topf T aufgestellt ist zur Beheizung durch den Gasbrenner 331. Der Gasbrenner 331 ist in einer Kochfeldplatte 313 integriert, die hier aus Glaskeramik ausgebildet ist ohne eine zuvor beschriebene Adaption durch eine Teilkochfeldplatte, jedoch weniger lichtdurchlässig ist wie zuvor beschrieben aufgrund des Dämpfungsverhaltens der Glaskeramik bei der verwendeten Lichtsignalwellenlänge λ. Die Endstücke E_{S} und ER können also ganz einfach von unten angelegt werden wie zuvor beschrieben, beispielsweise zur Kochstelle KS₁ bei der Fig. 3. Auch hier muss das Licht also die doppelte Distanz zwischen einem Endstück E und der Unterseite eines aufgestellten Topfes T überbrücken mit den zuvor beschriebenen Problemen bzw. Besonderheiten, wobei hier die Distanz sogar noch etwas größer ist als bei der Fig. 10. Ebenso ist es möglich, einen zusätzlichen Abstand der Endstücke E_{S} und E_{R} zur Unterseite der Glaskeramik vorzusehen, der für eine bessere Signalübertragung notwendig sein kann, beispielsweise allgemein 0,5 mm bis 5 mm oder sogar 10 mm. Die Glaskeramik kann auf der Unterseite eine Noppenstruktur oder eine glatte Oberfläche aufweisen.

## Patentansprüche

1. Vorrichtung zur Topferkennung an einem Kochfeld mit mehreren Kochstellen (KS₁-KSₙ) daran, wobei die Vorrichtung Lichtsender (S₁-Sₙ) und Lichtempfänger (R₁-Rₙ) aufweist zur Topferkennung bzw. zur Erkennung eines auf eine Kopfstelle aufgesetztem Topfes (T₁-Tₙ), indem der Lichtsender (S₁-Sₙ) Licht an den Topf (T₁-Tₙ) Aussendet und ein Lichtempfänger (R₁-Rₙ) das reflektierte bzw. zurückgesandte Licht empfängt, **dadurch gekennzeichnet, dass** ein Lichtempfänger (R₁-Rₙ) für mindestens zwei Kochstellen (KS₁-KSₙ) vorgesehen ist und dementsprechend ausgebildet ist.

2. Vorrichtung nach Anspruch 1, **dadurch gekennzeichnet, dass** für den mindestens einen Lichtempfänger (R₁-Rₙ) Lichtleitmittel (L₁-Lₙ) vorgesehen sind um Licht von den mindestens zwei überwachten bzw. dem Lichtempfänger (R₁-Rₙ) zugeordneten Kochstellen (KS₁-KSₙ) an den Lichtempfänger (R₁-Rₙ) zu leiten, wobei vorzugsweise die Lichtleitmittel (L₁-Lₙ) längliche Lichtleiter (LS₁-LSₙ₋₂) aufweisen.

3. Vorrichtung nach Anspruch 1 oder 2, **dadurch gekennzeichnet, dass** jeweils für genau zwei Kochstellen ein und derselbe Lichtempfänger (R₁-Rₙ) vorgesehen ist und zur Verbindung mit diesen Lichtleitmittel (L₁-Lₙ) vorgesehen sind.

4. Vorrichtung nach Anspruch 3, **dadurch gekennzeichnet, dass** für jeweils zwei Kochstellen (KS₁-KSₙ) genau ein Lichtsender (S₁-Sₙ) vorgesehen ist und zur Verbindung Lichtleitmittel (L₁-Lₙ) vorgesehen sind.

5. Vorrichtung nach Anspruch 4, **dadurch gekennzeichnet, dass** die zwei Kochstellen (KS₁-KSₙ), die einem Lichtempfänger (R₁-Rₙ) zugeordnet sind, jeweils mit unterschiedlichen Lichtsendern (S₁-Sₙ) erbunden bzw. diesen zugeordnet sind.

6. Vorrichtung nach Anspruch 1 oder 2, **dadurch gekennzeichnet, dass** für mehr als zwei bzw. drei oder mehr Kochstellen (KS₁-KSₙ) genau ein Lichtempfänger (R₁-Rₙ vorgesehen ist und zur Verbindung mit diesen Lichtleitmittel (L₁-Lₙ) vorgesehen sind.

7. Vorrichtung nach Anspruch 6, **dadurch gekennzeichnet, dass** für alle Kochstellen (KS₁-KSₙ) ein einziger Lichtempfänger (R₁-Rₙ) vorgesehen ist, wobei pro Kochstelle (KS₁-KSₙ) dieses Lichtempfängers (R₁-Rₙ) jeweils ein eigener Lichtsender (S₁-Sₙ) vorgesehen ist und zur Verbindung damit Lichtleitmittel (L₁-Lₙ) vorgesehen sind.

8. Vorrichtung nach einem der vorhergehenden Ansprüche, **dadurch gekennzeichnet, dass** zwei Lichtleiter (L_{S1}-L_{Sn-2}) der Lichtleitmitte (L₁-Lₙ) in einem spitzen Winkel zueinander enden.

9. Vorrichtung nach Anspruch 8, **dadurch gekennzeichnet, dass** die Enden der zwei Lichtleiter (L_{S1}-L_{Sn-2}) auf einen Lichtsender (S₁-Sₙ) und/oder auf einen Lichtempfänger (R₁-Rₙ) weisen.

10. Vorrichtung nach einem der Ansprüche 1 bis 7, **dadurch gekennzeichnet, dass** zwei Lichtteiter (L_{S1}-L_{Sn-2}) der Lichtleitmittel (L₁-Lₙ) im Wesentlichen parallel zueinander verlaufen und in Richtung eines Lichtsenders (S₁-Sₙ) und/oder Lichtempfängers (R₁-Rₙ) aber nicht direkt darauf weisen, wobei nahe an dem Lichtsender (S₁-Sₙ) und/oder Lichtempfänger (R₁-Rₙ) verspiegelte Flächen vorgesehen sind zur Umlenkung des von den Lichtleitern (LS₁-L_{Sn-2}) ausgesandten Lichtes auf den Lichtempfänger (R₁-Rₙ) oder des von dem Lichtsender (S₁-Sₙ) ausgesandten Lichtes auf die Lichtleiter (L_{S1}-L_{Sn-2}).

11. Vorrichtung nach einem der vorhergehenden Ansprüche, **gekennzeichnet durch** eine Halteeinrichhtung (25) für Lichtleitmittel (L₁-Lₙ), Lichtsender (S₁-Sₙ) und/oder Lichtempfänger (R₁-Rₙ), wobei die Lichtleiter (L_{S1}-L_{Sn-2}) mit gleicher Ausrichtung an der Halteeinrichtung (25) angeordnet sind und ebenso die Lichtsender (S₁-Sₙ) und/oder Lichtempfänger (R₁-Rₙ).

12. Vorrichtung nach Anspruch 11, **dadurch gekennzeichnet, dass** die Halteeinrichtung (25) eine Halteplatte für Lichtleitmittel (L_{S1}-L_{Sn-2}), Lichtsender (S₁-Sₙ) und/oder Lichtempfänger (S₁-Sₙ) ist, wobei die Lichtleiter (L₁-Lₙ) mit gleicher Ausrichtung an der Halteplatte angeordnet sind und ebenso die Lichtsender (S₁-Sₙ) und/oder Lichtempfänger (R₁-Rₙ).

13. Vorrichtung nach Anspruch 11 oder 12, **dadurch gekennzeichnet, dass** an der Halteeinrichtung (25) Haltemittel für mindestens einen Lichtleiter (L₁-Lₙ) oder ein Verbindungsstück für einen oder mehrere Lichtleiter (L₁-Lₙ) vorgesehen sind.

14. Verfahren zur Topferkennung, mit einer Vorrichtung nach einem der vorhergehenden Ansprüche, **dadurch gekennzeichnet, dass** an einem Kochfeld mit mehreren Kochstellen (KS₁-KSₙ) eine Topferkennung mit Lichtsendern (S₁-Sₙ) und Lichtempfängern (R₁-Rₙ) durchgeführt wird, wobei von einem Lichtsender (S₁-Sₙ) auf einen aufgesetzten Topf (T₁-Tₙ) gesandtes Licht von diesem reflektiert wird und das reflektierte Licht von einem Lichtempfänger (R₁-Rₙ) empfangen wird, wobei das Licht von mindestens zwei Kochstelle (KS₁-KSₙ) zu genau einem Lichtempfänger (R₁-Rₙ) geleitet wird.

## Claims

1. Device for detection of a pot on a cooktop having a plurality of cooking areas (KS₁-KSₙ) thereon, wherein the device includes light emitters (S₁-Sₙ) and light receivers (R₁-Rₙ) for pot detection or for detecting a pot (T₁-Tₙ) placed onto a cooking area, in that the light emitter (S₁-Sₙ) emits light towards the pot (T₁-Tₙ) and a light receiver (R₁-Rₙ) receives the reflected or remitted light, **characterized in that** a light receiver (R₁-Rₙ) is provided for at least two cooking areas (KS₁-KSₙ) and is configured correspondingly.

2. Device according to claim 1, **characterized in that** for the at least one light receiver (R₁-Rₙ) light-guide means (L₁-Lₙ) are provided in order to guide light from the at least two cooking areas (KS₁-KSₙ), monitored or assigned to the light receiver (R₁-Rₙ), to the light receiver (R₁-Rₙ), wherein preferably the light-guide means (L₁-Lₙ) have elongate light guides (Lₛ₁-Lₛₙ₋₂).

3. Device according to claim 1 or 2, **characterized in that** in each case for exactly two cooking areas one and the same light receiver (R₁-Rₙ) is provided and light-guide means (L₁-Lₙ) are provided for connection thereto.

4. Device according to claim 3, **characterized in that** for in each case two cooking areas (KS₁-KSₙ) exactly one light emitter (S₁-Sₙ) is provided and light-guide means (L₁-Lₙ) are provided for connection.

5. Device according to claim 4, **characterized in that** said two cooking areas (KS₁-KSₙ), which are assigned to one light receiver (R₁-Rₙ), are each connected and assigned, respectively, to different light emitters (S₁-Sₙ).

6. Device according to claim 1 or 2, **characterized in that** for more than two or three or more cooking areas (KS₁-KSₙ) exactly one light receiver (R₁-Rₙ) is provided and light-guide means (L₁-Lₙ) are provided for connection thereto.

7. Device according to claim 6, **characterized in that** for all of the cooking areas (KS₁-KSₙ) one single light receiver (R₁-Rₙ) is provided, wherein per cooking area (KS₁-KSₙ) of said light receiver (R₁-Rₙ) a respective distinct light emitter (S₁-Sₙ) is provided and light-guide means (L₁-Lₙ) are provided for connection thereto.

8. Device according to any of the preceding claims, **characterized in that** two light guides (Lₛ₁-Lₛₙ₋₂) of the light-guide means (L₁-Lₙ) terminate in an acute angle to each other.

9. Device according to claim 8, **characterized in that** the ends of the two light guides (Lₛ₁-Lₛₙ₋₂) point towards a light emitter (S₁-Sₙ) and/or towards a light receiver (R₁-Rₙ).

10. Device according to any of claims 1 to 7, **characterized in that** two light guides (Lₛ₁-Lₛₙ₋₂) of the light-guide means (L₁-Lₙ) extend essentially in parallel to each other and point in the direction of a light emitter (S₁-Sₙ) and/or a light receiver (R₁-Rₙ), but not directly thereon, wherein close to the light emitter (S₁-Sₙ) and/or light receiver (R₁-Rₙ) reflective surfaces are provided for deflecting the light emitted from the light guides (Lₛ₁-Lₛₙ₋₂) towards the light receiver (R₁-Rₙ) or the light emitted from the light emitter (S₁-Sₙ) towards the light guides (Lₛ₁-Lₛₙ₋₂).

11. Device according to any of the preceding claims, **characterized by** a retaining device (25) for light-guide means (L₁-Lₙ), light emitters (S₁-Sₙ) and/or light receivers (R₁-Rₙ), wherein the light guides (Lₛ₁-Lₛₙ₋₂) are disposed on the retaining device (25) with a same orientation and likewise are the light emitters (S₁-Sₙ) and/or light receivers (R₁-Rₙ).

12. Device according to claim 11, **characterized in that** the retaining device (25) has a retaining tray for light-guide means (L₁-Lₙ), light emitters (S₁-Sₙ) and/or light receivers (R₁-Rₙ), wherein the light guides (Lₛ₁-Lₛₙ₋₂) are disposed on the retaining tray with a same orientation and likewise are the light emitters (S₁-Sₙ) and/or light receivers (R₁-Rn).

13. Device according to claim 11 or 12, **characterized in that** retaining means are provided on the retaining device (25) for at least one light-guide (L₁-Lₙ) or a connecting piece is provided for one or a plurality of light-guides (L₁-Lₙ).

14. Method for detection of a pot using a device according to any of the preceding claims, **characterized in that** on a cooktop having a plurality of cooking areas (KS₁-KSₙ) pot detection is performed using light emitters (S₁-Sₙ) and light receivers (R₁-Rₙ), wherein light emitted from a light emitter (S₁-Sₙ) towards a placed-on pot (T₁-Tₙ) is reflected by said pot and the reflected light is received by a light receiver (R₁-Rₙ), wherein the light from at least two cooking areas (KS₁-KSₙ) is guided to exactly one light receiver (R₁-Rn).

## Revendications

1. Dispositif de détection de casserole sur un champ de cuisson sur lequel se trouvent une pluralité d'emplacements de cuisson (KS₁-KSₙ), dans lequel le dispositif comprend des émetteurs de lumière (S₁-Sₙ) et des récepteurs de lumière (R₁-Rₙ) pour la détection de casseroles ou pour détecter une casserole (T₁-Tₙ) placée sur un emplacement de cuisson, dans lequel l'émetteur de lumière (S₁-Sₙ) émet de la lumière vers la casserole (T₁-Tₙ) et un récepteur de lumière (R₁-Rₙ) reçoit la lumière réfléchie ou réémise, **caractérisé en ce qu'**un récepteur de lumière (R₁-Rₙ) est prévu pour au moins deux emplacements de cuisson (KS₁-KSₙ) et est conçu de manière correspondante.

2. Dispositif selon la revendication 1, **caractérisé en ce que**, pour l'au moins un récepteur de lumière (R₁-Rₙ), il est prévu des moyens de guidage de lumière (L₁-Lₙ) pour guider la lumière depuis les au moins deux emplacements de cuisson (KS₁-KSₙ) surveillés ou associés au récepteur de lumière (R₁-Rₙ) vers le récepteur de lumière (R₁-Rₙ), dans lequel les moyens de guidage de lumière (L₁-Lₙ) comprennent de préférence des guides de lumière allongés (Lₛ₁-Lₛₙ₋₂).

3. Dispositif selon la revendication 1 ou 2, **caractérisé en ce qu'**il est respectivement prévu, pour exactement deux emplacements de cuisson un seul et même récepteur de lumière (R₁-Rₙ) et **en ce qu'**il est prévu des moyens de guidage de lumière (L₁-Lₙ) destinés à être reliés à ceux-ci.

4. Dispositif selon la revendication 3, **caractérisé en ce que**, pour deux emplacements de cuisson respectifs (KS₁-KSₙ), il est prévu exactement un émetteur de lumière (S₁-Sₙ) et il est prévu des moyens de guidage de lumière (L₁-Lₙ) pour la connexion.

5. Dispositif selon la revendication 4, **caractérisé en ce que** les deux emplacements de cuisson (KS₁-KSₙ) qui sont associés à un récepteur de lumière (R₁-Rₙ) sont respectivement connectés à des émetteurs de lumière différents (S₁-Sₙ) ou sont associés à ceux-ci.

6. Dispositif selon la revendication 1 ou 2, **caractérisé en ce que**, pour plus de deux ou trois emplacements de cuisson (KS₁-KSₙ) ou plus, il est prévu exactement un récepteur de lumière (R₁-Rₙ) et il est prévu des moyens de guidage de lumière (L₁-Lₙ) destinés à être reliés à ceux-ci.

7. Dispositif selon la revendication 6, **caractérisé en ce que**, pour tous les emplacements de cuisson (KS₁-KSₙ), il est prévu un récepteur de lumière unique (R₁-Rₙ), dans lequel il est respectivement prévu pour chaque emplacement de cuisson (KS₁-KSₙ) de ce récepteur de lumière (R₁-Rₙ) un émetteur de lumière (S₁-Sₙ) qui lui est propre et **en ce qu'**il est prévu des moyens de guidage de lumière (L₁-Lₙ) destinés à être reliés à celui-ci.

8. Dispositif selon l'une quelconque des revendications précédentes, **caractérisé en ce que** deux guides de lumière (Lₛ₁-Lₛₙ₋₂) des moyens de guidage de lumière (L₁-Lₙ) se terminent en formant un angle aigu l'un par rapport à l'autre.

9. Dispositif selon la revendication 8, **caractérisé en ce que** les extrémités des deux guides de lumière (Lₛ₁-Lₛₙ₋₂) sont tournées vers un émetteur de lumière (S₁-Sₙ) et/ou vers un récepteur de lumière (R₁-Rₙ).

10. Dispositif selon l'une quelconque des revendications 1 à 7, **caractérisé en ce que** deux guides de lumière (Lₛ₁-Lₛₙ₋₂) des moyens de guidage de lumière (L₁-Lₙ) s'étendent sensiblement parallèlement l'un à l'autre et sont tournés dans la direction d'un émetteur de lumière (S₁-Sₙ) et/ou d'un récepteur de lumière (R₁-Rₙ) mais pas directement vers ceux-ci, dans lequel il est prévu à proximité de l'émetteur de lumière (S₁-Sₙ) et/ou du récepteur de lumière (R₁-Rₙ) des surfaces réfléchissantes destinées à dévier la lumière émise par les guides de lumière (Lₛᵢ-Lₛₙ₋₂) vers le récepteur de lumière (R₁-Rₙ) ou la lumière émise par l'émetteur de lumière (S₁-Sₙ) vers le guide de lumière (Lₛ₁-Lₛₙ₋₂) .

11. Dispositif selon l'une quelconque des revendications précédentes, **caractérisé par** un dispositif de maintien (25) pour des moyens de guidage de lumière (L₁-Lₙ), des émetteurs de lumière (S₁-Sₙ) et/ou des récepteurs de lumière (R₁-Rₙ), dans lequel les guides de lumière (Lₛ₁-Lₛₙ₋₂) sont disposés avec la même orientation sur le dispositif de maintien (25), cela étant également le cas des émetteurs de lumière (S₁-Sₙ) et/ou des récepteurs de lumière (R₁-Rₙ).

12. Dispositif selon la revendication 11, **caractérisé en ce que** le dispositif de maintien (25) est une plaque de maintien pour des moyens de guidage de lumière (Lₛ₁-Lₛₙ₋₂), des émetteurs de lumière (S₁-Sₙ) et/ou des récepteurs de lumière (R₁-Rₙ), dans lequel les guides de lumière (L₁-Lₙ) sont disposés avec la même orientation sur la plaque de maintien, cela étant également le cas des émetteurs de lumière (S₁-Sₙ) et/ou des récepteurs de lumière (R₁-Rₙ).

13. Dispositif selon la revendication 11 ou 12, **caractérisé en ce qu'**il est prévu sur le dispositif de maintien (25) des moyens de maintien pour au moins un guide de lumière (L₁-Lₙ) ou une pièce de connexion destinée à un ou plusieurs guides de lumière (L₁-Lₙ).

14. Procédé de détection de casserole comportant un dispositif selon l'une quelconque des revendications précédentes, **caractérisé en ce qu'**une détection de casserole est effectuée à l'aide d'émetteurs de lumière (S₁-Sₙ) et de récepteurs de lumière (R₁-Rₙ) sur un champ de cuisson comportant plusieurs emplacements de cuisson (KS₁-KSₙ), dans lequel la lumière émise par un émetteur de lumière (S₁-Sₙ) vers une casserole (T₁-Tₙ) mise en place est réfléchie par celle-ci et la lumière réfléchie est reçue par un récepteur de lumière (R₁-Rₙ), dans lequel la lumière est guidée depuis au moins deux emplacements de cuisson (KS₁-KSₙ) vers exactement un récepteur de lumière (R₁-Rₙ).
